# EUROPEAN PATENT SPECIFICATION

(11) **EP 2 514 854 B1**
(45) Date of publication and mention of the grant of the patent: **19.09.2018**
(21) Application number: 09852320.2
(22) Date of filing: 25.12.2009
(51) Int. Cl.: B23K 101/20, B23K 101/38, B23K 9/04, B23K 10/02, C21D 6/00, C21D 6/02, C21D 9/00, C21D 9/08, C21D 9/14, C21D 9/28, C21D 9/38, C23C 4/06, C21D 1/06, C22C 19/07

(54) **MEMBER FOR CONVEYING HIGH-TEMPERATURE MATERIALS**
ELEMENT ZUR FÖRDERUNG VON HOCHTEMPERATURSTOFFEN
ÉLÉMENT POUR LE TRANSPORT DE MATIÈRES À HAUTE TEMPÉRATURE

(30) Priority: 16.12.2009 JP 2009285188
(43) Date of publication of application: 24.10.2012
(73) Proprietor: Nippon Steel & Sumitomo Metal Corporation, Tokyo 100-8071 (JP)
(72) Inventor: NISHIYAMA, Yoshitaka, Osaka-shi Osaka 541-0041 (JP); KAWAKAMI, Tadashi, Osaka-shi Osaka 541-0041 (JP); ONO, Toshihide, Osaka-shi Osaka 541-0041 (JP); YONEYAMA, Mikio, Amagasaki-shi Hyogo 660-0811 (JP); TATSUMI, Yoshihiro, Amagasaki-shi Hyogo 660-0811 (JP)
(74) Representative: TBK
(86) International application number: PCT/JP2009/071628
(87) International publication number: WO 2011/074131

(56) References cited:
- EP-A1- 1 443 125
- WO-A1-2010/001859
- JP-A- 3 094 984
- JP-A- 9 271 983
- JP-A- 2007 092 180
- JP-A- 2007 100 217
- US-A1- 2002 119 338

## Description

The present invention relates to a high-temperature material transferring member suitable for retaining and transferring a high-temperature material, such as steel materials, heated by heat treatment etc., and in particular to a high-temperature material transferring member such as transfer rollers and skid buttons in a heat treatment furnace.

### BACKGROUND ART

In hot working of metal materials such as hot processing for the production of seamless tubes and the like, it is common to use transferring members such as roller conveyors for transferring, for example, materials to be processed or products in a heat treatment furnace, or those materials heated to high temperatures in a heat treatment furnace, etc. (hereinafter, generally referred to as "high-temperature materials").

If for example slipping occurs between high-temperature material and the transferring member when the high-temperature materials are being transferred, sticking may occur between the high-temperature material and the transferring member. At that moment, if peeled-off material from the high-temperature material or oxide thereof locally adheres to the high-temperature material or the transferring member surface (hereinafter, such deposits are referred to as "build-ups"), a problem arises in that an indentation defect occurs on the surface of the high-temperature material being transferred, thus deteriorating the surface quality and yields of the product.

In order to suppress such defects, attempts have been made so far, for example, to select a material having excellent sticking resistance such as a Cr or Ni alloy as the base metal of the transferring member; however, such attempts alone have not achieved sufficient effects in reality. Accordingly, as shown below, various members have been proposed in which a coating film is formed on the surface of base metal.

For example, Patent Document 1 discloses an invention for providing a strong oxide-scale coating film on the surface of the base metal of a roller by performing overlay welding on the surface of the base metal with a heat resistant material based on 3Cr-1Ni-Fe alloy containing 30 to 50 vol% of NbC, and then subjecting the coating film to a heat treatment in an oxidizing atmosphere containing CO gas. According to this invention, it is stated that a hot transfer roller having excellent wear resistance and sticking resistance can be produced, whereby no adhesion will occur between the two surfaces of hot processing material and roller when transferring the hot processing material.

Patent Document 2 discloses a technique for preventing the sticking of a hot processing tool, in which the hot processing tool has a two-layer coating film made up of a metal-carbide composite coating film containing Nb carbide particles in volume ratio of 20 to 70%, and an oxide coating film formed on the outermost surface of the concerned coating film, on the surface of base metal. Moreover, Patent Document 3 proposes an invention relating to a composite welding material for plasma powder overlay welding made up of an alloy powder consisting of Cr, W, Fe, and C, the balance being Co, and a carbide-based ceramic powder of 20 to 70 wt%, and Patent Document 4 proposes an invention relating to a roll overlaid with cobalt or a cobalt-based alloy containing 20 to 60 vol% of chromium carbide.

Patent Document 5 discloses an invention relating to a surface treatment method for metal parts, in which powder of Co-Cr-Fe alloy material added with Cr₃C₂ is overlaid by a plasma powder welding to form a lining layer. Patent Document 6 discloses an invention relating to a high-temperature material transfer roller having excellent build-up resistance, in which a metal-carbide composite coating film containing 20 to 70 vol% of carbides with the balance being metal is formed on the outermost surface of the roller. Further, Patent Document 7 proposes a method in which to suppress the occurrence of cracking in a hardfaced overlay layer, a molten carbon steel, which is added with hard particles of carbide or carbo-nitride in an unmelted state with part of them being melted, is solidified and is further quenched. Patent Documents 8 and 9 disclose inventions relating to welding materials for overlay, which respectively contain 25.0 to 45.0%, and 20 to 40% of Co with the balance being Fe.

Besides the methods for forming overlay layer as described above, there have been proposed technologies relating to the surface modification by use of a spraying process.

For example, Patent Document 10 discloses an invention relating to a sprayed roll for processing steel materials, in which a sprayed coating film made up of 10 to 50 area% of hard particles having a grain diameter of 1 to 100 µm, and 90 to 50 area% of matrix alloy phase is provided on the surface of a barrel portion of the roll. Moreover, Patent Document 11 discloses an invention relating to an electrolytic plating conductor roll, in which reprecipitated carbides are dispersed in a sprayed coating film of mixed powder made up of 10 to 60 wt% of carbide cermet powder and 90 to 40 wt% of C-containing nickel chromium alloy powder.

Patent Document 12 discloses an invention relating to a roll in a heat treatment furnace, having a carbide-based coating film excellent in build-up resistance, heat resistance, and wear resistance, in which a cermet material of an alloy containing 50 to 90 wt% of chromium carbide, with the balance being one or two kinds of nickel and cobalt, and one or two kinds of chromium and aluminum is sprayed on the surface of the roll. Further, Patent Document 13 discloses an invention relating to a sprayed coating film suitable for a sliding wear member subjected to repeated thermal shocks, the spray coating film made up of a heat resistant alloy containing 5 to 30 wt% of one or more kinds of carbide, boride, oxide, and composite oxide of Cr etc., with the balance being Co, Cr and Mo.

For use with a transfer roll in a heat treatment furnace for steel strips, Patent Document 14 discloses an invention relating to a cermet powder for spray coating excellent in build-up resistance, in which the cermet powder is made up of an alloy powder containing Al, Cr and Y, with the balance being one or more kinds of Co and Ni, and a ceramic powder including one or more kinds of boride and carbide. Moreover, Patent Document 15 discloses an invention relating to a roll for continuous casting, which is formed with 0.5 to 3 mm of a spray coated layer made up of a self-influxing alloy (Ni-based or Co-based) containing 10 to 50 wt% of carbide such as tungsten carbide, chromium carbide, and niobium carbide, or a mixture thereof bonded with one or more metal binders, the balance being C: 0.02 to 0.25 wt%, and Cr: 0.5 to 15 wt%. Furthermore, Patent Document 16 discloses an invention relating to a roll for transferring high-temperature steel plate, in which the roll is coated, on the surface of the base metal, with a mixed coating layer of ceramics and nickel-based alloy or cobalt-based self-influxing alloy by a spraying process.

EP1443125 (A1) discloses a metallic product coated with a matrix of Co/Cr-alloy with a dispersed hard phase consisting of Cr₃C₂. Preferably the Co/Cr matrix of EP1443125 (A1) comprises 60 to 96% of Co and 40 to 4% of Cr while the coating comprises 40% ≤ Co < 70%, 25% ≤ Cr < 50%. The Cr₃C₂ content is comprised between 30 and 60%.

US2002119338 (A1) describes a turbine engine component including a substrate and a wear coating on the substrate. The wear coating includes wear-resistant particles in a matrix phase, the wear-resistant particles being formed of chrome carbide or a cobalt alloy. Methods for forming a turbine engine component are also disclosed.

### LIST OF PRIOR ART DOCUMENTS

### PATENT LITERATURE

[Patent Document 1] JP5-84570A
[Patent Document 2] JP6-315704A
[Patent Document 3] JP64-18599A
[Patent Document 4] JP3-207510A
[Patent Document 5] JP8-13116A
[Patent Document 6] JP2003-340511A
[Patent Document 7] JP2008-763A
[Patent Document 8] JP62-134193A
[Patent Document 9] JP64-11093A
[Patent Document 10] JP3-2362A
[Patent Document 11] JP5-295592A
[Patent Document 12] JP6-33149A
[Patent Document 13] JP9-316621A
[Patent Document 14] WO01/34866
[Patent Document 15] JP2006-263807A
[Patent Document 16] JP63-255352A

### DISCLOSURE OF THE INVENTION

### PROBLEMS TO BE SOLVED BY THE INVENTION

The technologies proposed by Patent Documents 1 and 2 relate to the formation of composite coating films of NbC and an alloy on the base metal, and are intended for the prevention of sticking. However, NbC has poor oxidation resistance, and it cannot stably exist particularly in a high-temperature gas atmosphere, thereby exhibiting a sharp decline in wear resistance. The technologies proposed by Patent Documents 3 to 5 relate to the formation of composite coating films of various carbides including Cr carbide and a metal on the base metal, and are intended for the improvement of wear resistance at high temperatures. However, as the result of having tried to improve wear resistance, these coating films become to have a hard and brittle metal micro-structure so that cracking becomes more likely to occur during cooling in the working of plasma powder overlay. Since wear resistance declines in a crack portion, these coating films have a problem that uniform quality cannot be obtained. Moreover, as the result of being subjected to thermal cycles of heating and cooling during a use for many hours, further cracking occurs, thus impairing wear resistance.

Since the coating film proposed by Patent Document 6 also becomes to have a brittle metal micro-structure having a high hardness, it is difficult to avoid the occurrence of cracking, and the deposition of oxide becomes easier around a crack portion so that build-up resistance deteriorates. Further, while the invention described in Patent Document 7 intends to suppress the occurrence of cracking in a hard and brittle overlay layer, since it is a coating film consisting of a filler material made up of carbon steel and carbide, enough oxidation resistance cannot be obtained so that the surface of the coating film changes, and wear resistance and build-up resistance deteriorate as well. On the other hand, in the inventions described in Patent Documents 8 and 9, since the welding material is made up of a reduced content of Co, with the balance being Fe, although it is possible to suppress the occurrence of cracking in the overlay layer, wear resistance is not sufficient.

In the methods for forming a coating film by spraying shown in Patent Documents 10 to 16, the coating film is formed by converting a coating material, which is heated and melted, into fine particles by gas flow, and making it collide with and stack on the base material. Therefore, in general, pores are likely to be formed in the coating film, and therefore it cannot be said that wear resistance and build-up resistance are sufficient. Moreover, while the coating film formed by a plasma powder overlaying process is melted to be bonded (chemically bonded) with the base material, a sprayed coating film and the base material are physically bonded, and therefore the bonding strength thereof is weak. Therefore, in a transfer roller for high-temperature material, a formed coating film peels off while in use, thus sharply reducing wear resistance and build-up resistance. Since the mixed coating layer shown in Patent Document 16 has a low Cr content, oxidation resistance is not sufficient, and not suitable particularly for a transfer roll for high-temperature materials, particularly reaching a temperature of 1100°C or more.

The present invention has its object to provide a high-temperature material transferring member, which is excellent in build-up resistance, wear resistance, and oxidation resistance in a high-temperature gas atmosphere, and in which the occurrence of cracking during plasma powder overlay working is suppressed, and more specifically, a high-temperature material transferring member, which has excellent build-up resistance when used in a high-temperature gas atmosphere, in particular, a gas atmosphere of high temperature reaching 1100°C or more, and in which the occurrence of indentation defect is prevented.

### MEANS FOR SOLVING THE PROBLEMS

The present inventors have conducted various studies on the method for preventing a build-up, which is effective even in the transfer by rollers in a gas atmosphere which becomes a high temperature, particularly 1100°C or more, such as in a heat treatment furnace, and have consequently obtained the following findings.
(a) Conventional methods for preventing build-ups have placed an emphasis on the prevention of sticking and adhesion between a high-temperature material and a transferring member. For this reason, they have been looking to utilize hot lubricating effect by oxide scale of the surface of the transferring member and enhance the effect thereof; however, such a prevention method has its limitation in suppressing the occurrence of indentation defect by build-ups. That is, so far, emphasis has been placed on strengthening the oxide scale, which has a hot lubricating effect, to make it resistant to peeling off; however, the oxide scale becomes thin due to usage for a long period of time, or peels off due to impact, and it has not been possible to suppress build-ups.
(b) Accordingly, the present inventors focused attention on that in order to effectively suppress the occurrence of indentation defects in the surface of the high-temperature material being transferred, it is effective to form an overlay coating film on the surface of the transferring member, and to reduce the adhesiveness of oxide scale (A) which is produced when the coating film is oxidized, that is, to increase peelability. With such a configuration, even if the oxide scale (B) of the transferred material side is migrated to the oxide scale (A) of the transferring member side, the oxide scale (A) easily peels off from the overlay coating film, and therefore the oxide scale (B) will be removed together with the oxide scale (A). As a result, it is possible to prevent build-ups, and effectively suppress the occurrence of surface defects such as indentation defects on the high-temperature material to be transferred.
(c) It has been found that to increase the peelability of the oxide scale (A) on the overlay coating film, it is effective to disperse different materials that reduce adhesiveness in the overlay coating film. After conducting various studies on the pertinent different materials, it has been found that Cr carbides have build-up resistance. Such effects are particularly remarkable in a gas atmosphere of a temperature of 1100°C or more. Moreover, it has been found that providing an alloy-Cr carbide composite coating film (hereinafter, simply referred to as a "composite coating film"), in which Cr carbide is dispersed, can provide wear resistance.
(d) As a result of a study on the application of the composite coating film in a high-temperature gas atmosphere, it has been found that besides the build-up resistance and wear resistance, oxidation resistance is also important for long-term usage. Further, it has been found that cracking may occur in the working of plasma powder overlay, and such a defect will impair build-up resistance and wear resistance. Having investigated the effects of the components of alloy powder of the composite coating film to solve the problems described above, it has been found that it is important to have Cr and Si being contained by a desired amount to improve oxidation resistance, and on the other hand, it is important to reduce the hardness of the composite coating film by limiting the C content to suppress the occurrence of cracking.
(e) Meanwhile, although it is possible to suppress the occurrence of cracking in the composite coating film during overlay working by limiting the C amount of the alloy powder, a problem exists, on the other hand, in that wear resistance is likely to decline. For that reason, it is necessary to appropriately control the C content. Further, it has been found that to secure wear resistance, it is essential to make the principal component of the alloy powder be Co, instead of Ni or Fe. That is, a composite coating film using a Co-based alloy powder containing Co of more than 50%, with C content being 0.03 to 0.6 mass%, can realize wear resistance and suppression of cracking during overlay working at the same time, and can exhibit excellent build-up resistance. In the transferring member that satisfies the conditions described above, even if a scale of high-temperature material such as a starting material for a seamless tube is melted and adheres to the surface of the transferring member causing a build-up, it will peel off and fall out before it grows, and therefore the build-up will not grow large. As a result of this, it is possible to transfer high-temperature materials for a long period of time without causing surface defects thereon.
   According to the findings (b) to (e), an excellent high-temperature material transferring member can be obtained. However, the present inventors have found as a result of further research that wear resistance and build-up resistance may decline depending on use conditions, and cracking may occur during the working of plasma powder overlay. As the result of carefully analyzing the main factors thereof, the following findings have been obtained.
(f) It has been found that the occurrence of cracking is also affected by the volume ratio of Cr carbide in the composite coating film. That is, when the content rate of Cr carbide is too small, build-up resistance and wear resistance may not be secured, and on the other hand, when the content ratio is too large, a large number of cracks may occur during working. For that reason, it has been found that the content of Cr carbide powder is 20 to 70 vol% in volume ratio with respect to the total amount of mixed powder.
(g) This phenomenon occurred only when used in a temperature range, particularly exceeding 1200°C, and was a phenomenon peculiar to a use environment of ultra-high temperature. Then, an investigation on the reactivity of the composite coating film was conducted by using DTA (differential thermal analysis), and an endothermic reaction is observed near the use temperature. Although details of this reaction are not fully clear, it is likely that a state change where the composite coating film starts fusing, or a chemical change of carbides has occurred. As the result of the occurrence of such a reaction, the strength of the composite coating film sharply declines, resulting in declines of wear resistance and build-up resistance thereof. Investigation on the effects of elements in the alloy powder has found that Si, which is contained to increase oxidation resistance of Co-based alloy, and C, which is contained to increase wear resistance, both lower the temperature at which endothermic reaction occurs (hereinafter, referred to as an "endothermic reaction temperature"). Accordingly, it is necessary to appropriately control Si and C contents. Moreover, when considering operation at 1200 to 1250°C, the micro-structure of the composite coating film is preferably controlled such that the endothermic reaction temperature observed in the composite coating film is 1250°C or more.

The present invention has been made based on such findings, and its gist is high-temperature material transferring members according to claims 1 - 5.

### ADVANTAGEOUS EFFECTS OF THE INVENTION

According to the present invention, even if a high-temperature material is transferred under a high-temperature environment such as inside a heat treatment furnace, no build-up will be produced for a long period of time, and thus no indentation defect on the transferred material will occur. Further, it also provides an excellent durability. Thus, since the present invention contributes to quality improvement of hot working products, increase of yields, as well as reduction of production cost by extending the life of transfer rollers, advantageous effects thereof are remarkable. In particular, since as the contact area between the material to be transferred and the roll decreases, the pressure at the contact portion increases, resulting in a pronounced build-up and wear, the present invention is suitable for rolls for use in transferring metal materials having a small contact area such as tube-shaped materials.

### BRIEF DESCRIPTION OF THE DRAWING

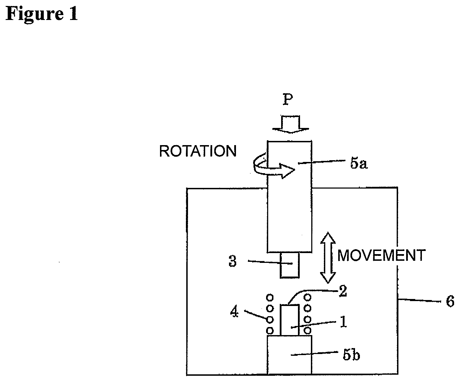

[Figure 1] Figure 1 is a cross-sectional schematic view to show the configuration of a rotary friction compressing tester.

### MODE FOR CARRYING OUT THE INVENTION

A high-temperature transferring member relating to the present invention has a composite coating film of Co-based alloy-Cr carbide on the surface of the base metal thereof. This composite coating film is formed by a plasma powder overlaying process by using a Co-based alloy powder and a Cr-carbide powder. In the following description, unless otherwise defined, "%" regarding the content of a component refers to "mass%".

### 1. Co-based alloy powder

### C: 0.03 to 0.6%

C has a function of increasing the hardness at high temperatures, and to achieve this effect, its content needs to be 0.03% or more. On the other hand, if it is contained more than 0.6%, cracking will occur in an overlay coating film during cooling in the working by plasma powder overlaying, thereby significantly reducing wear resistance and build-up resistance in the crack portion. Therefore, the content of C is determined to be 0.03 to 0.6%. It is noted that since C decreases the endothermic reaction temperature, its upper limit is preferably 0.5%, and a more preferable upper limit is 0.4% particularly for high temperature use. Moreover, with the C content being 0.05% or more, the effects described above will become more pronounced. More preferably, the C content is 0.1% or more.

### Si: 0.2 to 3%

Si is an element that increases oxidation resistance of the composite coating film in a high-temperature gas atmosphere, and it needs to be contained 0.2% or more. On the other hand, if Si is contained more than 3%, the improvement effect of oxidation resistance is small, and the endothermic reaction temperature of the composite coating film will rather be reduced, thus sharply reducing build-up resistance and wear resistance at high-temperature operations. Therefore, the Si content is determined to be 0.2 to 3%. From the viewpoint of oxidation resistance, the content is preferably 0.3% or more. On the other hand, in the points of build-up resistance and wear resistance, its content is preferably 2% or less. Particularly, when used in a gas atmosphere of 1100°C or more, its content is preferably 1% or less.

### Cr: 22 to 35%

Cr is an effective element to increase oxidation resistance, and it needs to be contained 22% or more. On the other hand, if Cr is contained more than 35%, the composite coating film will become hard and brittle, thus promoting cracking during the overlay working. Moreover, since toughness is reduced, cracking will be occurred when the member is subjected to a rapid heating/cooling load during operation. In such a crack portion, build-up resistance and wear resistance will sharply decline. Therefore, the content of Cr is determined to be 22 to 35%. A preferable lower limit of Cr content is 23%, and a preferable upper limit thereof is 33%.

### Co: more than 50%

Compared with Ni-based alloys and Fe-based alloys, a Co-based alloy can increase the hardness at high temperatures and therefore exhibits advantageous effects in wear resistance. Therefore, in the present invention, it is decided to use a Co-based alloy powder containing more than 50% of Co as the base component of the composite coating film. When emphasis is placed on wear resistance, its content is preferably 55% or more, and more preferably 61% or more.

Besides the aforementioned elements, the following elements may be contained in an appropriate amount as needed to improve properties such as high-temperature strength and toughness.

### Mn, Cu, Ni, and Fe: 10% or less for each

Since Mn, Cu, Ni, and Fe are effective elements to stabilize the micro-structure, one or more kinds selected from these elements may be contained as needed. However, if they are excessively contained, the wear resistance of composite coating film will decline. Therefore, the contents of these elements when they are contained are preferably 10% or less, respectively. More preferable upper limit contents are 9%, respectively. It is noted that if the elements described above are contained even in minute quantities, the effects described above will be achieved; however, the effects will become pronounced when each element is contained 0.1% or more. Although the total content of these elements is not specifically designated, it is preferably 20% or less.

### Mo and W: 10% or less for each

### B, Ti, V, Zr, Nb, and Ta: 3% or less for each

Since Mo, W, B, Ti, V, Zr, Nb, and Ta are effective to improve high-temperature strength, one or more kinds selected from these elements may be contained as needed. However, if they are excessively contained, carbides, nitrides, brittle phases precipitate in the alloy and the micro-structure thereof becomes brittle so that cracking is more likely to occur during the overlay working. Moreover, there is a risk that cracking occurs due to abrupt stopping and cooling during high-temperature operation. Therefore, when one or more kinds selected from Mo and W are contained, the contents thereof are preferably 10% or less, respectively, and when one or more kinds selected from B, Ti, V, Zr, Nb, and Ta are contained, the contents thereof are preferably 3% or less, respectively. More preferable upper limits are 7% respectively for Mo and W, and 1.4% respectively for B, Ti, V, Zr, Nb, and Ta. It is noted that if the elements described above are contained even in minute quantities, the effects described above will be achieved; however, the effects will become pronounced when the content is 0.001% or more for B; 0.01% or more respectively for Ti, V, Zr, Nb, and Ta; and 0.1% or more respectively for Mo and W. Although the total content of these elements is not specifically designated, it is preferably 6% or less.

### Al, Ca, and REM: 1% or less, respectively

Since Al, Ca, and REM, which have a strong affinity with oxygen, may be contained for the immobilization of oxygen during the overlay working. However, if they are excessively contained, coarse oxides will be produced in the alloy, thereby impairing the workability of overlay welding. Therefore, when one more kinds selected from these elements are contained, those contents are preferably 1% or less, respectively. The Al content is more preferably 0.3% or less, and the contents of Ca and REM are more preferably 0.1% or less, respectively. Where, "REM" stated in the present description refers to a general term for a total of 17 elements including Sc, Y and lanthanoid etc., and the content of REM refers to the total content of the elements described above. Moreover, if the elements are contained even in minute quantities, the effects described above will be achieved; however, the effects will become pronounced when the content is 0.005% or more for Al, 0.001% or more for Ca, and 0.01% or more for REM. Although the total content of these elements is not specifically designated, it is preferably 2% or less.

It is noted that a Co-based alloy powder may contain elements such as P, S, N, and O as impurities. It is also possible to increase strength by actively containing these elements. Impurities refer to elements which are introduced from raw materials such as ores and scraps etc., and by other causes when the alloy material is industrially produced, and which are permitted within a range not adversely affecting the present invention.

### 2. Cr carbide

Cr carbide has an effect of increasing high-temperature hardness while securing oxidation resistance at high temperatures. Therefore, it exhibits excellent oxidation resistance and wear resistance in a composite coating film with alloy powder. Particularly, it is effective in a gas atmosphere of 1100°C or more. Cr carbide includes Cr₃C₂, Cr₇C₃, Cr₂₃C₆, and so on. Moreover, these carbides may be combined with each other. The content of Cr carbide is 20 vol% or more in the volume ratio with respect to the total amount of mixed powder to increase the peelability of the oxide scale (A) on the composite coating film of the transferring member. Preferably, the content is 30 vol% or more. On the other hand, when the content of Cr carbide exceeds 70 vol%, the effect of improving build-up resistance is saturated, and besides the proportion of alloy decreases thereby reducing the retaining power of carbides so that the formation of composite coating film may become difficult. Moreover, it may promote cracking during the plasma powder overlay working. For this reason, the content of Cr carbide in the composite coating film is 70 vol% or less.

Here, although there is no specific limitation on the size of Cr carbide, it is preferable to use carbide particles having an average diameter within a range of 50 to 200 µm since those are effective to be uniformly dispersed in the matrix. The shape of carbide may be spherical, elliptic, and rod-like shapes, or a mixture thereof.

### 3. Method of forming composite coating film

The method for forming a composite coating film in a high-temperature material transferring member relating to the present invention utilizes a method of feeding the mixed powder described above into a plasma generated between an electrode and the base metal to cause the same to be melted and overlaid on the surface of base metal, that is, a plasma powder overlaying process. According to this method, smaller porosity compared with a case of plasma spraying etc. and good adhesiveness with the base material enable the reduction of damages due to peeling off. Further, the method enables to conveniently form the coating film, and is advantageous in the production cost as well.

Although there is no limitation on the thickness of composite coating film, it is preferable that the thickness is 0.3 mm or more to secure sufficient surface strength in a range from normal temperatures to high temperatures. Particularly, when used in a gas atmosphere of 1100°C or more, a thickness of 0.5 mm or more is preferable, and a thickness of 1 mm or more is more preferable.

### 4. Endothermic reaction temperature

It is important that a composite coating film which has undergone an overlay working of a mixed powder of Co-based alloy powder and Cr carbide by a plasma powder overlaying process does not change the micro-structure state in association with a reaction at a high temperature. When the endothermic reaction temperature of the coating film is less than 1250°C, there is a risk that it cannot maintain sufficient build-up resistance and wear resistance as a transferring member, for example, for a heat treatment furnace of high temperature such as more than 1200°C to 1250°C. Therefore, the endothermic reaction temperature is preferably 1250°C or more. It is noted that the temperature at which reaction starts is controlled by the composition of alloy powder, the kind of hard particles, and the mixing ratio thereof of the composite coating film. The endothermic temperature can be determined in such a way that a specimen is cut out from the composite coating film, electromotive force is measured by for example, TG-DTA (differential thermal balance) etc., and the endothermic temperature is determined from the change of electro motive force associated with heat absorption.

### 5. Base metal of high-temperature material transferring member

As the base metal of the high-temperature material transferring member according to the present invention, known steels which have been conventionally used for transfer rollers may be used. In particular, when used in a high-temperature furnace (in a high-temperature atmosphere), it is necessary that deformation due to repeated thermal stress, and breakage due to the propagation of a crack will not occur, and the base metal may be appropriately selected taking into consideration of the temperature, deformation resistance and use conditions of the material to be processed. For example, stainless cast steel, heat resistant cast steel, and the like may be used. Although the shape of the high-temperature material to be transferred may be arbitrary, the present invention exhibits its effects of build-up resistance and wear resistance particularly when used for the rollers for transferring metal tubes.

After a composite coating film is formed on the surface of base metal, it can be used as a product as it is. Moreover, stress relief annealing and cutting processing of the outer surface may be appropriately carried out.

### EXAMPLES

First, a mixed powder (Sample Nos. 1 to 14) obtained by mixing an alloy powder having a chemical composition shown in Table 1 and a carbide powder, and an alloy powder (Sample No. 15) were prepared. Using these powders, a coating film of a thickness of 0.7 to 4.5 mm was formed on the surface of a base metal made up of Ni-Cr alloy by a plasma powder overlaying process, and used as a sample material. These sample materials were subjected to the following test to confirm the advantageous effects of the present invention.

### [Build-up test]

From each of the sample materials described above, a cylindrical specimen (test material A) having a diameter of 20 mm and a length of 50 mm was cut out such that the surface formed with the coating film corresponded to the end surface of the specimen, and on the other hand a cylindrical specimen (test material B) having a diameter of 20 mm and a length of 50 mm was cut out from SUS 304 steel, so that both the specimens were subjected to a build-up test by using a tester shown in Figure 1.

Figure 1 is a cross-sectional schematic view to show the configuration of a rotary friction compressing tester which simulates an occurrence of build-ups. This tester is an experimental apparatus that simulates a build-up that occurs when a high-temperature material is transferred by a transferring member such as a roller conveyor in a heat treatment furnace. In Figure 1, reference sign 1 denotes a cylindrical test material A that simulates the high-temperature material transferring member; reference sign 2 denotes a coating film formed on the end surface of the test material A, reference sign 3 denotes a cylindrical test material B that simulates the material to be transferred, reference sign 4 denotes a high-frequency heating coil, reference signs 5a and 5b denote test material supports, and reference sign 6 denotes a heating chamber, respectively.

After the test materials were mounted to the supports in the upper and lower parts of the test apparatus, the heating chamber was closed, and the high-frequency heating coil was energized and kept for one hour so that the test material A was heated to 1250 °C in the atmosphere. In the beginning, the test material B (reference sign 3) was stopped at an upper standby position of the test material A as shown in Figure 1. Next, the test material B was moved downward while being rotated so that the end surface thereof was brought into pressure contact with the surface of the composite coating film of the test material A. At this moment, load P applied to the test material B was 98 N, and the rotational speed was 5 rpm, and the pressure contact time in one cycle of pressure contact operation was 6 seconds. After the end of pressure contact, the test material B was returned to the upper standby position, and thus completing one cycle of pressure contact operation. After repeating this pressure contact operation for 100 cycles, the temperature was lowered, and the test material A was dismounted from the support and subjected to an investigation of the occurrence of build-up by visual observation. This operation was repeated until a build-up occurred. The number of cycles at which a build-up occurred is shown in Table 1.

It is noted that the time from the start of descent of the test member B to the start of pressure contact, and the time from the end of pressure contact to the end of ascent were both 15 seconds, the time until the end of 100 cycles was about 1 hour, and thereafter cooling to around normal temperature was performed for about 1 hour. The test material in which a built-up occurred after 500 cycles was judged to be excellent in built-up resistance.

### [Abrasion test]

A specimen having a thickness of 5 mm, a width of 25 mm, and a length of 50 mm including the coating film of the sample material described above was cut out. This specimen was subjected to the investigation of the abrasive wear of the composite coating film using an Ogoshi-type abrasion tester. The test was conducted by using SUJ-2 as the opposite material, at a load of 12.75 kg and a test distance of 200 m, at a normal temperature. The abrasive wear (mm³) after test was obtained and shown in Table 1. It is noted that the sample material in which an abrasive wear was 0.2 mm³ or less was judged to be excellent in wear resistance.

### [High-temperature oxidation test]

A specimen having a thickness of 2mm, a width of 10 mm, and a length of 15 mm was cut out from the portion of the sample material described above, where a coating film was formed. After being degreased, this specimen was subjected to an oxidation test in a heating furnace under a gas atmosphere of 20% O₂ - 5% H₂O - bal.N₂ at 1250°C for 50 hours. Thereafter, each specimen was taken out and cooled to a normal temperature; then after an oxide scale generated on the specimen was removed, a wall thickness reduction was measured at five arbitrary points using a micrometer; and thereafter an average thereof was determined and shown in Table 1.

It is noted that the sample material which showed a wall thickness reduction of 200 µm or less was judged to be excellent in oxidation resistance.

### [Heat crack test]

After a coating film of 3 mm thickness was formed by overlaying on Ni-Cr alloy having a thickness of 20 mm, a width of 70 mm, and a length of 100 mm, a specimen including the coating film and having a thickness of 20 mm, a width of 40 mm, and a length of 40 mm was cut out. With the operation of inserting the specimen into a heating furnace of 1250°C, keeping it for one hour, and thereafter cooling it to a normal temperature being as one cycle, 10 cycles thereof were conducted. Thereafter, the occurrence of cracking was evaluated by appearance observation and a penetrating test. The occurrence and non-occurrence of cracking are shown in Table 1.

### [Table 1]

**Table 1**

| Sample number | Chemical composition of alloy powder (mass%) | | | | | Kinds of carbide | Film thickness (mm) | Carbide volume ratio (vol%) | Endothermic reaction temperature (°C) | Build-up occurrence timing (cycle) | Abrasive wear (mm³) | Wall thickness reduction (µm) | Occurrence or non-occurrence of cracking |
|---|---|---|---|---|---|---|---|---|---|---|---|---|---|
| | C | Si | Cr | Co | Balance | | | | | | | | |
| 1 | 0.06 | 0.6 | 26.5 | 72.4 | - | Cr carbide | 2.9 | 50 | 1300 | 600 | 0.13 | 40 | Non-occurrence |
| 2 | 0.12 | 0.6 | 25.3 | 62.5 | 8Fe,3Mo | Cr carbide | 3.0 | 50 | 1275 | 600 | 0.11 | 50 | Non-occurrence |
| 3 | 0.47 | 0.7 | 24.8 | 61.6 | 3.9W,0.3Nb,0.1 V,7.9Ni | Cr carbide | 0.7 | 30 | 1250 | 600 | 0.18 | 80 | Non-occurrence |
| 4 | 0.11 | 1.4 | 26.1 | 56.1 | 1.6Mn,0.2B,6.2Mo,7.9Fe | Cr carbide | 2.9 | 50 | 1260 | 700 | 0.17 | 70 | Non-occurrence |
| 5 | 0.12 | 0.6 | 26.2 | 64.5 | 1,5Cu,6.5Mo,0.3Ti,0.1A1 | Cr carbide | 1.8 | 70 | 1290 | 800 | 0.09 | 60 | Non-occurrence |
| 6 | 0.15 | 0.2 | 22.5 | 65.4 | 1.5Ta,0.2Zr,0.03REM,4.2Fe,5.5Ni,0.04Ca | Cr carbide | 4.5 | 50 | 1300 | 500 | 0.12 | 120 | Non-occurrence |
| 7 | 0.01* | 1.7 | 25.4 | 68.3 | 2.9Mo,1.2Fe | Cr carbide | 3.0 | 50 | 1325 | 100# | 0.32# | 90 | Non-occurrence |
| 8 | 0.75* | 1.1 | 28.2 | 61.2 | 4.5W,2.5Ni,1.3Fe | Cr carbide | 3.0 | 60 | 1240* | 200# | 0.08 | 70 | Occurrence# |
| 9 | 0.12 | 0.5 | 25.8 | 49.4* | 0.7Mn,4.5Mo,9.5Fe,9.2Ni | Cr carbide | 2.9 | 50 | 1270 | 200# | 0.30# | 60 | Non-occurrence |
| 10 | 0.33 | 1.4 | 18.5* | 70.4 | 5.5W,1.2Mo,2.2Ni | Cr carbide | 3.0 | 50 | 1272 | 500 | 0.11 | 320# | Non-occurrence |
| 11 | 0.22 | 0.1* | 26.1 | 68.7 | 4.5Mo | Cr carbide | 2.9 | 50 | 1315 | 500 | 0.12 | 260# | Non-occurrence |
| 12 | 0.57 | 3.8* | 24.5 | 61.2 | 4.3Mo,5.4Ni | Cr carbide | 3.0 | 50 | 1205* | 200# | 0.33# | 50 | Occurrence# |
| 13 | 0.12 | 0.6 | 25.9 | 62.1 | 2.9Mo,7.5Fe,0.5Ni,0.01B | Cr carbide | 2.8 | 15* | 1310 | 300# | 0.34# | 60 | Non-occurrence |
| 14 | 0.25 | 1.5 | 26.7 | 61.1 | 5.5Mo,2.2Fe,2.5Ni | Nb carbide* | 3.0 | 50 | 1380 | 100# | 0.08 | >1000# | Non-occurrence |
| 15 | 0.25 | 1.5 | 26.7 | 61.1 | 5.5Mo,2.2Fe,2.5Ni | None* | 2.9 | 50 | 1330 | 100# | 0.42# | 70 | Non-occurrence |

| | | | | | | | | | | | | | |
|---|---|---|---|---|---|---|---|---|---|---|---|---|---|
| * means that the value is out of the range defined by the present invention. # means that required performance is not satisfied. | | | | | | | | | | | | | |

It is noted that the "film thickness" in Table 1 shows the coating film thickness of the specimen used in the build-up test and the high-temperature oxidation test. The coating film thicknesses of the specimens for heat crack test were all 3 mm.

As shown in Table 1, in all of Sample No. 7 having a low C content in the alloy powder, Sample No. 8 having a high C content and a low endothermic reaction temperature, Sample No. 9 having a low Co content, Sample No. 12 having a high Si content and a low endothermic reaction temperature, Sample No. 14 using a Nb carbide powder as the hard particles, and Sample No. 15 including an overlay coating film formed only with Co-based alloy powder, a build-up occurred in a short time period of 200 cycles or less, indicating poor build-up resistance. A build-up occurred at 300 cycles in Sample No. 13 in which the volume ratio of Cr carbide was low, showing poor build-up resistance. In all of Sample No. 7 having a low C content in the alloy powder, Sample No. 9 having a low Co content, Sample No. 12 having a high Si content, Sample No. 13 having a low volume ratio of Cr carbide, and Sample No. 15 including an overlay coating film formed with a Co-based alloy powder alone, the abrasive wear was large showing poor wear resistance.

In all of Sample No. 10 having a low Cr content in the alloy powder, Sample No. 11 having a low Si content, and Sample No. 14 using Nb carbide, the wall thickness reduction was large in the high-temperature oxidation test, indicating poor oxidation resistance.

Further, in Sample No. 8 having a high C content and Sample No. 12 having a high Si content and a low endothermic reaction temperature, cracking occurred in the heat crack test, indicating poor heat cracking resistance.

On the other hand, Sample Nos. 1 to 6 of the present invention were excellent in all of build-up resistance, wear resistance, oxidation resistance and heat cracking resistance.

### INDUSTRIAL APPLICABILITY

According to the present invention, even if a high-temperature material is transferred under a high-temperature environment such as inside a heat treatment furnace, no build-up will be produced for a long period of time, and thus no indentation defect on the transferred material will occur. Further, it also provides an excellent durability. Thus, since the present invention contributes to quality improvement of hot working products, increase of yields, as well as reduction of production cost by extending the life of transfer rollers, advantageous effects thereof are remarkable.

### REFERENCE SIGNS LIST

1: Cylindrical test material A (Test material that simulates a high-temperature material transferring member)
2: Coating film
3: Cylindrical test material B (Test material that simulates a material to be transferred)
4: High-frequency heating coil
5a: Test material support (with a rotating and lifting mechanism)
5b: Test material support
6: Heating chamber

## Claims

1. A high-temperature material transferring member including a coating film formed on a surface of base metal by a plasma powder overlaying process, wherein the coating film is a composite coating film using a mixed powder made up of
a Co-based alloy powder containing, in mass%, 0.03 to 0.6% of C, 0.2 to 3% of Si, 22 to 35% of Cr, and more than 50% of Co, and
a Cr carbide powder,
wherein the content of Cr carbide powder is 20 to 70 vol% in a volume ratio with respect to a total amount of mixed powder,
and wherein the Co-based alloy powder further optionally contains, in mass%, one or more elements selected from the following groups <1> to <4>:
<1> Mn: 10% or less, Cu: 10% or less, Ni: 10% or less, and Fe: 10% or less;
<2> Mo: 10% or less, and W: 10% or less;
<3> B: 3% or less, Ti: 3% or less, V: 3% or less, Zr: 3% or less, Nb: 3% or less, and Ta: 3% or less; and
<4> Al: 1% or less, Ca: 1% or less, and REM: 1% or less.

2. The high-temperature material transferring member according to claim 1, wherein the balance of the Co-based alloy powder is impurities.

3. The high-temperature material transferring member according to claim 1, wherein the Co-based alloy powder consists of in mass%, 0.03 to 0.6% of C, 0.2 to 3% of Si, 22 to 35% of Cr, more than 50% of Co, and optionally one or more elements selected from the following groups <1> to <4>:
<1> Mn: 10% or less, Cu: 10% or less, Ni: 10% or less, and Fe: 10% or less;
<2> Mo: 10% or less, and W: 10% or less;
<3> B: 3% or less, Ti: 3% or less, V: 3% or less, Zr: 3% or less, Nb: 3% or less, and Ta: 3% or less; and
<4> Al: 1% or less, Ca: 1% or less, and REM: 1% or less,
with the balance being impurities.

4. The high-temperature material transferring member according to any one of claims 1 to 3, wherein an endothermic reaction temperature of the coating film is 1250°C or more.

5. The high-temperature material transferring member according to any one of claims 1 to 4, wherein the high-temperature material transferring member has excellent build-up resistance in a gas atmosphere of 1100°C or more.

## Patentansprüche

1. Hochtemperaturmaterialübertragungselement beinhaltend einen auf einer Oberfläche eines Basismetalls durch einen Plasmapulverüberlagerungsprozess gebildeten Beschichtungsfilm, wobei der Beschichtungsfilm ein Kompositbeschichtungsfilm ist, der ein gemischtes Pulver verwenden, das hergestellt ist aus
einem Co-basierten Legierungspulver enthaltend, in Masse-%, 0,03 bis 0,6% an C, 0,2 bis 3% an Si, 22 bis 35% an Cr, und mehr als 50% an Co, und
ein Cr-Karbidpulver,
wobei der Gehalt an Cr-Karbidpulver 20 bis 70 Volumen-% ist in einem Volumenverhältnis in Bezug auf eine Gesamtmenge von gemischtem Pulver,
und wobei das Co-basierte Legierungspulver ferner optional enthält, in Masse-%, ein oder mehr Elemente ausgewählt aus den folgenden Gruppen <1> bis <4>:
<1> Mn: 10% oder weniger, Cu: 10% oder weniger, Ni: 10% oder weniger, und Fe: 10% oder weniger;
<2> Mo: 10% oder weniger, und W: 10% oder weniger;
<3> B: 3% oder weniger, Ti: 3% oder weniger, V: 3% oder weniger, Zr: 3% oder weniger, Nb: 3% oder weniger, und Ta: 3% oder weniger; und
<4> Al: 1% oder weniger, Ca: 1% oder weniger, und REM: 1% oder weniger.

2. Hochtemperaturmaterialübertragungselement nach Anspruch 1, wobei der Rest des Co-basierten Legierungspulvers Verunreinigungen sind.

3. Hochtemperaturmaterialübertragungselement nach Anspruch 1, wobei das Co-basierte Legierungspulver besteht aus, in Masse-%, 0,03 bis 0,6% von C, 0,2 bis 3% an Si, 22 bis 35% an Cr, mehr als 50% an Co, und optional ein oder mehr Elemente ausgewählt aus den folgenden Gruppen <1> bis <4>:
<1> Mn: 10% oder weniger, Cu: 10% oder weniger, Ni: 10% oder weniger, und Fe: 10% oder weniger;
<2> Mo: 10% oder weniger, und W: 10% oder weniger;
<3> B: 3% oder weniger, Ti: 3% oder weniger, V: 3% oder weniger, Zr: 3% oder weniger, Nb: 3% oder weniger, und Ta: 3% oder weniger; und
<4> Al: 1% oder weniger, Ca: 1% oder weniger, und REM: 1% oder weniger,
wobei der Rest Verunreinigungen sind.

4. Hochtemperaturmaterialübertragungselement nach einem der Ansprüche 1 bis 3, wobei eine endothermische Reaktionstemperatur des Beschichtungsfilms 1.250°C oder mehr ist.

5. Hochtemperaturmaterialübertragungselement nach einem der Ansprüche 1 bis 4, wobei das Hochtemperaturmaterialübertragungselement exzellenten Aufbauwiderstand in einer Gasatmosphäre von 1.100°C oder mehr aufweist.

## Revendications

1. Élément de transfert de matériau à haute température comprenant un film de revêtement formé sur une surface de métal de base par un procédé de recouvrement de poudre par plasma, dans lequel le film de revêtement est un film de revêtement composite utilisant une poudre mixte constituée
d'une poudre d'alliage à base de Co contenant, en % en masse, 0,03 à 0,6 % de C, 0,2 à 3 % de Si, 22 à 35 % de Cr, et plus de 50 % de Co, et
d'une poudre de carbure de Cr,
dans lequel la teneur en poudre de carbure de Cr est de 20 à 70 % en volume en un rapport de volume relativement à une quantité totale de poudre mixte,
et dans lequel la poudre d'alliage à base de Co contient en outre facultativement, en % en masse, un ou plusieurs éléments sélectionnés dans les groupes <1> à <4> suivants :
<1> Mn : 10 % ou moins, Cu : 10 % ou moins, Ni : 10 % ou moins, et Fe : 10 % ou moins ;
<2> Mo : 10 % ou moins, et W : 10 % ou moins ;
<3> B : 3 % ou moins, Ti : 3 % ou moins, V : 3 % ou moins, Zr : 3 % ou moins, Nb : 3 % ou moins, et Ta : 3 % ou moins ; et
<4> Al : 1 % ou moins, Ca : 1 % ou moins, et REM : 1 % ou moins.

2. Élément de transfert de matériau à haute température selon la revendication 1, dans lequel le reste de la poudre d'alliage à base de Co est des impuretés.

3. Élément de transfert de matériau à haute température selon la revendication 1, dans lequel la poudre d'alliage à base de Co est constituée de, en % en masse, 0,03 à 0,6 % de C, 0,2 à 3 % de Si, 22 à 35 % de Cr, et plus de 50 % de Co, et facultativement un ou plusieurs éléments sélectionnés dans les groupes <1> à <4> suivants :
<1> Mn : 10 % ou moins, Cu : 10 % ou moins, Ni : 10 % ou moins, et Fe : 10 % ou moins ;
<2> Mo : 10 % ou moins, et W : 10 % ou moins ;
<3> B : 3 % ou moins, Ti : 3 % ou moins, V : 3 % ou moins, Zr : 3 % ou moins, Nb : 3 % ou moins, et Ta : 3 % ou moins ; et
<4> Al : 1 % ou moins, Ca : 1 % ou moins, et REM : 1 % ou moins,
le reste étant des impuretés.

4. Élément de transfert de matériau à haute température selon l'une quelconque des revendications 1 à 3, dans lequel une température de réaction endothermique du film de revêtement est de 1 250 °C ou plus.

5. Élément de transfert de matériau à haute température selon l'une quelconque des revendications 1 à 4, dans lequel l'élément de transfert de matériau à haute température a une excellente résistance à la formation de dépôt par accumulation dans une atmosphère de gaz de 1 100 °C ou plus.
